# EUROPEAN PATENT SPECIFICATION

(11) **EP 0 841 579 B1**
(45) Date of publication and mention of the grant of the patent: **19.01.2000**
(21) Application number: 98100293.4
(22) Date of filing: 29.04.1993
(51) Int. Cl.: G01S 13/02, G08C 17/02

(54) **Remote identification and sensor system**
Fernidentifizierungs und Sensor-System
Système d'identification à distance et de reconnaissance

(30) Priority: 29.04.1992 US 875907
(43) Date of publication of application: 13.05.1998
(62) Divisional of application: 93106974.4
(73) Proprietor: Texas Instruments Incorporated, Dallas, Texas 75251 (US)
(72) Inventor: Schuermann, Josef H., 85416 Oberhummel/Langenbach (DE)
(74) Representative: Schwepfinger, Karl-Heinz, Dipl.-Ing.

(56) References cited:
- EP-A- 0 301 127
- EP-A- 0 442 390
- US-A- 4 075 632

## Description

### Field of the Invention

This invention relates to radio-frequency identification systems which operate with sequential power/read functions.

### Background of the Invention

Radio-frequency identification systems with interrogator sequential power/read functions, operate over a large dynamic range with regard to field strength levels. This phenomena stems from the fact that the largest required reading range of any given read area defines the power level in conjunction with the predetermined time window. If an RF-ID system is designed for maximum range, the close-proximity field strength is very high for the transponders nearest the interrogator. In such cases, transponders may be heated up by the over-voltage protection circuit which is absorbing excessive power in near field conditions. The second negative effect is that most of the charge-up pulse is wasted for the closest transponders. If, for example, a power pulse must be 50 milliseconds in length to charge the furthest transponder, but the closest transponder requires only .5 milliseconds to obtain sufficient energy to return a reply, the other 49.5 milliseconds of the power pulse is wasted on the closest transponders.

The over-charging problem is especially disadvantageous in temperature sensor applications. In such applications, an accurate temperature measurement may not be obtainable because the transponder eventually dissipates the extra power pulse energy in the surrounding area of the sensor, which is typically in the temperature measurement vicinity. Over-charging can cause the temperature of the transponder to rise anywhere from 20-80 C, depending upon the required reading range and/or the transponders distance from the interrogator, thereby causing enormous errors in the temperature measurement readings.

### Summary of the Invention

Since the distance from the interrogator to the transponder cannot be controlled in many RF-ID and remote sensor applications, measurement compensation is provided to eliminate measurement errors due to transponder heat-up. The remote identification and sensor system according to the invention comprises an interrogator for transmitting an interrogation signal, a transponder for receiving said interrogation signal, for performing a sensor measurement and for transmitting a response signal in response to said interrogation signal, an antenna for receiving said interrogation signal and for transmitting said response signal in response, a rectifying element connected in series with said antenna for rectifying said interrogation signal, a storage element connected in series with said antenna for storing a predetermined amount of said rectified interrogation signal, a current sensing over-voltage protection circuit connected in parallel with said series combination of said antenna and said storage element, comprising a series combination of an over-voltage protection element and a current sensing element, and a circuit element for making a sensor measurement, and for compensating said sensor measurement, and for generating a response signal, having two inputs with one input connected in series with said rectifying element and the second input connected between said over-voltage protection element and said current sensing element.

### Brief Description of the Drawings

Figure **1** is a block diagram of the interrogator showing those elements that make up an integral part of the invention.

Figure **2** is a block diagram of the transponder showing those elements that make up an integral part of the invention.

Figure **3** is a timing and voltage diagram showing the excess energy a close transponder must dissipate when a power pulse to reach the farthest power pulse is transmitted by a prior art interrogator.

Figure **4** is a timing and voltage diagram that shows the absorption of the interrogation pulse by dischargeable transponders according to the invention.

Figure **5** is a timing and voltage diagram that shows the aborption and the discharge of the interrogation pulse by dischargeable transponders according to the invention.

Figure **6** is a timing and voltage diagram that shows how transponders with no discharge function can be charged with a series of like duration interrogation pulses.

Figure **7** is a timing and voltage diagram that shows how transponders with no discharge function can be charged with a series of increasingly longer duration interrogation pulses.

Figure **8** is a timing and voltage diagram showing the optimum length of time and voltage of the interrogation pulse in a high speed automobile vehicle identification application.

### Detailed Description of the Preferred Embodiments

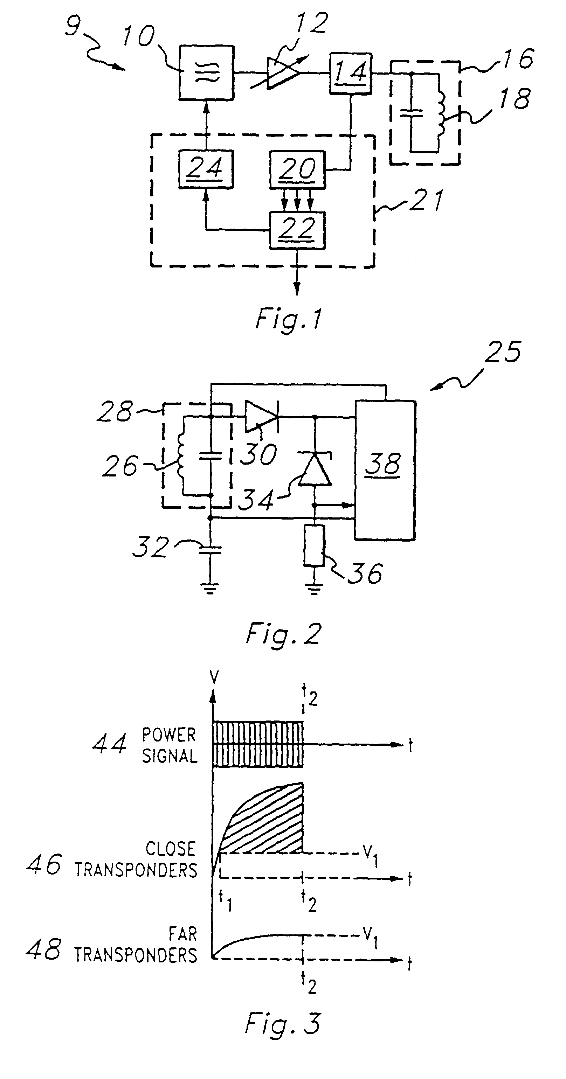

A block diagram of an interrogator is shown in Figure **1**. According to a first preferred embodiment, an oscillator **10** of the interrogator **9**, commanded by a microprocessor not shown, sends a signal through a variable amplifier **12** to a coupler **14**, where the amplified interrogation signal resonates the parallel resonant combination **16** and is transmitted via the antenna **18**. The first interrogation signal transmitted is a short power pulse, for example, 5 milliseconds, which is shorter in pulse duration than would be required to power up the most distant transponder. The receiver **20** of the interrogator **9** then listens for a short, predetermined time period, for example, **1** millisecond, for a transponders response signal. If the receiver **20** does not detect a response during the predetermined listening time period, it sends a control signal to the Pulse Width Control Circuitry **21**. According to one embodiment, the Pulse Width Control Circuitry **21** includes a data control circuit **22** which receives the control signal from receiver **20**, and in turn sends a signal to the time duration control circuit **24** to increase the duration of the interrogation pulse. The interrogator **9** continues a cycle of sending successively longer duration interrogation pulses and monitoring for a transponders response until the receiver **20** in the interrogator **9** detects the presence of a transponders response signal, thereby signifying an adequate charge-up power level in the transponder. Resonant circuit **28** which resonates with the interrogation signal frequency in the transponder **25** is shown in Figure **2**. The interrogation pulse is rectified by the diode **30** and the voltage stored in energy storage element **32**. Circuit element **38** generates the transponder response signal in response to the termination of the interrogation pulse and a voltage level representative of a predetermined amount of power received from the interrogation pulse signal. The termination of the interrogation pulse is detected in the transponder by an RF threshold detector, which is not shown, when the amplitude of the RF oscillation at the resonant circuit **28** has dropped below a predetermined level. Therefore, for transponders **25** with no discharge function, the interrogation pulses are received, rectified and stored such that, if the received pulses do not translate into enough power to enable a response, the transponder **25** substantially maintains the current voltage level and waits for another interrogation pulse. On the other hand, for a transponder **25** with a discharge function, the interrogation pulse is received, rectified and stored such that, if the received pulse does not translate into enough voltage to enable a response, the transponder **25** is discharged and must wait for a longer duration pulse. The difference between charging a transponder **25** with a discharge function and charging a transponder **25** without a discharge function, located the same distance from an interrogator **9**, is that the transponder **25** with no discharge function can charge-up to the required voltage with a series of short duration, or low amplitude pulses and the transponder **25** with a discharge function must wait for a longer duration, or higher amplitude interrogation pulse.

As an illustration of the variable duration interrogation pulse preferred embodiment, the task of locating a single transponder which has a discharge function is addressed. An interrogation pulse of short duration is transmitted initially from the antenna **18** of interrogator **9**. Then, receiver **20** listens for a predetermined time period, much shorter than the duration of the interrogation pulse, and upon the absence of a transponders response signal, Pulse Width Control Circuit **24** increases the duration of the interrogation pulse. Although the transponder **25** has not responded, signifying storage of an insufficient amount of interrogation signal energy, the transponder **25** may have stored some energy from the interrogation signal, simply not enough to transmit a response signal. However, because the transponder **25** has a discharge function, as soon as the transponder acknowledges that the interrogation signal has terminated and there is an inadequate amount of energy stored, transponder **25** discharges. Therefore, to charge-up transponder **25**, an interrogation pulse of the same duration as the first interrogation pulse would not suffice. The transmission of a longer duration interrogation pulse, as transmitted by the interrogator **9** of Figure **1** would be necessary. Thus, the interrogator **9** continues to send longer and longer duration interrogation pulses until the interrogator detects the presence of a transponders response signal. In this way, the transponder is charged to the required voltage without heating up with excess interrogation signal energy. In another embodiment of the invention, the transponder **25** does not have a discharge function. Therefore, a series of interrogation pulses having the same duration may also charge-up the transponder **25** to the required voltage also without causing the transponder **25** to heat up with excess interrogation signal energy.

One of the greatest advantages offered by the interrogator transmitting a series of short duration, lower power interrogation pulses versus very long duration, very high power interrogation pulses is realized in a remote temperature measurement system. Transponders **25** which have temperature measurement sensors, are prone to inaccurate temperature readings in a standard RF-ID system which continually transmits an interrogation pulse of adequate duration to charge-up the furthest transponder. By transmitting a minimum duration interrogation signal, followed by successively longer interrogation pulses, transponders with temperature sensors can achieve more accurate temperature measurements. For example, in a prior-art remote temperature sensor system, a transponder receives, stores and rectifies the interrogation signal and upon a detected decrease in the power level of the interrogation signal and in response to a voltage level representative of a predetermined amount of power received from the interrogation pulse signal, makes a temperature measurement and transmits a transponder response signal indicative of the temperature measurement. In addition, if the interrogation pulse is of longer duration than necessary to charge the transponder to the predetermined voltage, the remainder of the interrogation pulse is received, rectified and dissipated as heat, as shown in Figure **3**. Figure **3** shows a voltage versus time diagram for a typical prior art RF-ID system. The power signal **44** of length **t**_{**2**} which is the amount of time it takes to power up the furthest transponder **48** in a given RF-ID system, is transmitted and the voltage versus time diagrams for the closest **46** and the furthest **48** transponders are shown underneath. The closest transponder **46** stores **V**_{**1**} amount of voltage, which is the amount of voltage required by the transponder to return a response, by time **t**_{**1**} which is a very small percentage of the duration of the interrogation signal. Therefore, from **t**_{**1**} to **t**_{**2**}, while the furthest transponder **48** is still charging up to the required voltage **V**_{**1**} and waiting for the end of the power burst signal, the closest transponder **46** is exposed to the same pulse and may heat up while it dissipates the excess energy of the interrogation signal. The excess energy being dissipated as heat by the close transponder **46** is indicated in the shaded region of the close transponders **46** voltage versus time diagram. There is little to no excess energy to be dissipated by the far transponder **48**, as seen in its voltage versus time diagram, as transponder **48** requires all the energy absorbed to perform the temperature meansurement, not impaired by heating-up effects, and transmit the transponder response signal.

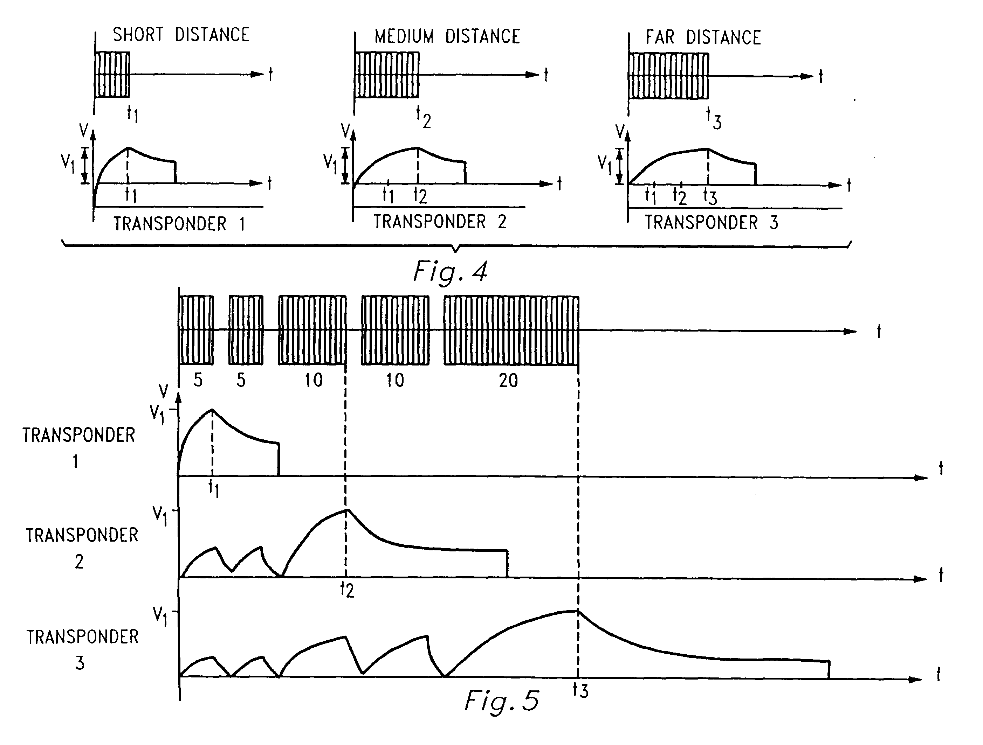

However, in a preferred embodiment according to the invention, Figure **4** shows how varying the length of the interrogation pulse can charge-up transponders having a discharge function, located at different distances from the interrogator, to the same required voltage **V**_{**1**}, without the transponders having to dissipate extra interrogation signal as heat. For example, Transponder **1** is located just a short distance from the interrogator, therefore requiring only the minimum interrogation pulse duration **t**_{**1**} to achieve the required voltage **V**_{**1**} to transmit a response signal. Therefore, Transponder **1** receives the interrogation pulse of duration **t**_{**1**}, detects a decrease in the power level of the interrogation pulse and a voltage level **V**_{**1**}, representative of a predetermined amount of power received from the interrogation pulse signal, takes a temperature measurement and transmits a response signal. As shown in Figure **4**, Transponder **1** does not receive any excess interrogation signal which it must dissipate as heat. In a preferred embodiment of the invention, after sending a response signal, Transponder **1** is inactivated for a predetermined amount of time to allow the rest of the Transponders within a given interrogation range to respond. Therefore when the interrogator then transmits an interrogation pulse of duration **t**_{**2**}, Transponder **1** does receive the interrogation pulse but is inactivated and does not respond thus intefere with Transponder **2** signal. Instead, Transponder **2** receives the interrogation pulse of duration **t**_{**2**}, takes a temperature measurement and transmits a response signal under the same conditions as Transponder **1**. Because interrogator **9** is transmitting successively longer duration interrogation pulses, instead of the maximum required duration pulses which would charge up the furthest transponder, Transponder **1**, **2** and **3** are activated.

Although the transponders are receiving much closer to the exact amount of energy necessary to respond, there may still be some excess interrogation energy to dissipate, but just not nearly as much excess, especially for the transponders close to the interrogator. In a preferred embodiment according to the invention, transponder **25** performs temperature sensor functions via circuit element **38**, and circuit element **38** also provides corrected temperature measurements which are corrected by an over-voltage compensating logic circuit, also a part of circuit element **38**. Zener diode **34** and current sensor resistor **36** together form a current sensing over-voltage protection circuit. The value of zener diode **34** is chosen such that it will conduct when a higher voltage level exists than that representing the predetermined amount of power required to transmit a transponders response signal has been received from the interrogation signal. In other words, the conduction of the zener diode **34** signifies an over-voltage condition. Upon conduction of zener diode **34** and detection of such conduction by the current sensing element **36**, a signal is transmitted from the current sensing element **36** to the temperature measurement compensating logic circuit of circuit element **38**. The temperature measurement compensating logic circuit **38** receives a current level from the current sensing element **36** and combines this information with the amount of time elapsed from the start of current flow, then adjusts the temperature measurement accordingly, thereby compensating for the heat being generated by the excess energy of the interrogation pulse. Once the temperature measurement has been adjusted, the transponder response signal generator of circuit element **38** then transmits a response signal via antenna **26** back to the interrogator of Figure **1**, wherein in one preferred embodiment according to the invention, comprises an identification code and a heat compensated temperature measurement.

In another preferred embodiment according to the invention, instead of compensating for the inaccuracy of the temperature measurement, the temperature measurement is performed before the transponder has time to heat up. In other words, before the termination of the interrogation pulse, for example, in the first millisecond that a voltage level **V**_{**1**}, representative of a predetermined amount of power received from the interrogation pulse signal is detected, take the temperature measurement and then store the temperature measurement. After the transponder then detects a decrease in the power level of the interrogation signal, retrieve the temperature measurement and transmit the response signal back to the interrogator.

Another illustration of a preferred embodiment according to the invention comprising the interrogator **9** of Figure **1** and the Transponders **1**, **2** and **3**, which have a discharge function, of Figure **4**, is illustrated in Figure **5**. Interrogator **9** transmits a first minimum duration interrogation pulse of 5 msec in duration. Transponder **1** closest to the interrogator **9** charges up to the required voltage **V**_{**1**} with the first interrogation pulse and sends a response signal in return. After Transponder **1** transmits a response signal back to the interrogator **9**, in a preferred embodiment, Transponder **1** is inactive to transmit another response signal for the predetermined amount of time that it takes for the remainder of the transponders in the interrogation range to respond. Therefore, when the interrogator **9** sends a second pulse of 5 msec, the same duration as the first pulse, the receiver **20** of the interrogator does not detect a response signal and the duration of the next interrogation pulse is increased via the Pulse Width Control Circuit **24**. In the embodiment shown in Figure **5**, the increase is shown to be double the original pulse width.

Transponders **2** and **3** are further from the interrogator and charge up partially from the first and second 5 msec interrogation pulses, but do not acquire the **V**_{**1**} volts required to return a response signal. Therefore, while Transponder **1**, having received adequate energy from interrogation pulse of duration **t**_{**1**} to respond, is transmitting the response signal, Transponders **2** and **3** are discharging the amount of energy received from the interrogation pulse of duration **t**_{**1**}. Upon transmission of the interrogation pulse of 10 msec duration, Transponder **2** is charged up to a voltage of **V**_{**1**}, initiating a response signal, and subsequently inactivating Transponder **2**. Again, the interrogator **9** transmits an interrogation pulse of 10 msec duration, and the receiver **20** of the interrogator does not detect a response signal and, in the embodiment shown, the Pulse Width Control Circuit **24** doubles the duration of the next interrogation pulse to 20 msec. Transponder **3** is the furthest of the transponders from the interrogator **9**, thus none of the first four interrogation pulses were of sufficient duration to charge Transponder **3** to the required voltage **V**_{**1**}. However, transmission of the interrogation pulse of 20 msec duration charged Transponder **3** to the voltage **V**_{**1**}, initiating a response signal, and subsequently inactivating Transponder **3**.

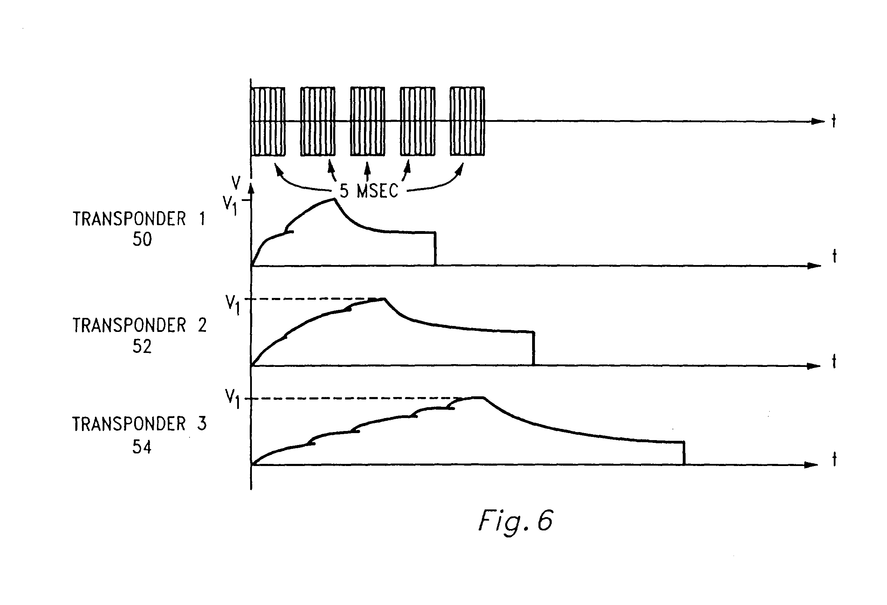

Although Figures **4** and **5** show a preferred embodiment according to the invention relative to transponders which have discharge functions, Figure **6** shows a preferred embodiment of the invention relative to transponders which have no discharge function. The advantage of using transponders with no discharge function, is that the interrogation signal duration does not have to be increased to reach further and further transponders. In addition, the transponders after receiving any energy from an interrogation signal at all, retain a substantial amount of that energy, and add any new energy received from other interrogation pulses to that existing amount of energy. For example, Transponder **60** receives some energy from the first 5 msec, minimum duration, interrogation pulse, and substantially retains that energy. Upon reception of the second 5 msec duration interrogation pulse, Transponder **60** has acquired **V**_{**1**} volts of interrogation energy and is enabled to transmit a response signal. Transponder **62**, which is further from the interrogator than Transponder **60**, receives some energy from the first two 5 msec interrogation pulses, but because it is further from the interrogator than Transponder **60**, Transponder **62** does not receive as much energy. However, the energy that Transponder **62** has received is retained and upon transmission of a third, 5 msec interrogation pulse, Transponder **62** also acquires **V**_{**1**} volts and transmits a response signal. Transponder **64**, which is the furthest transponder from the interrogator, also receives and retains energy from the first three, 5 msec interrogation pulses and requires two more, 5 msec interrogation pulses before it has received the necessary **V**_{**1**} volts necessary to transmit a response signal.

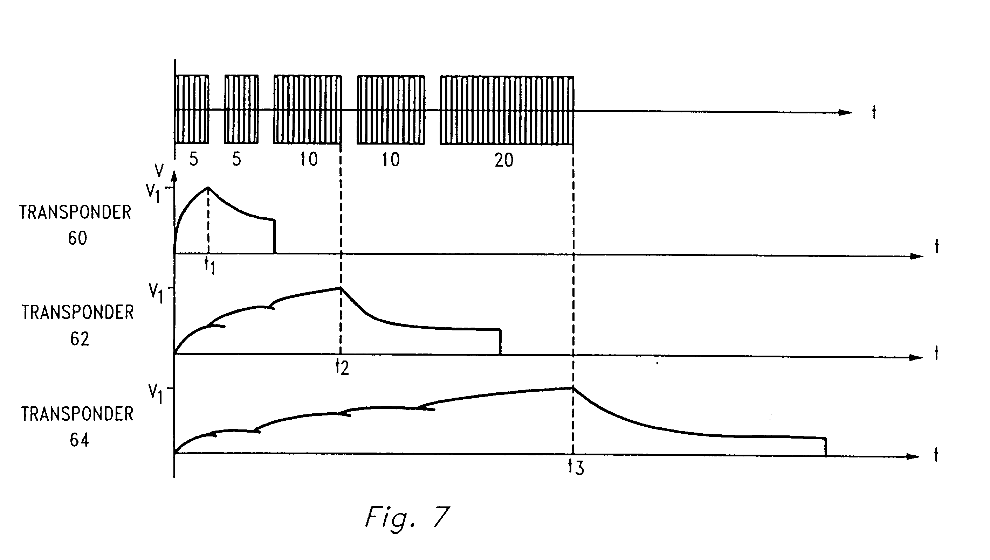

Although Figure **6** shows that transponders with no discharge function, located at different distances from the interrogator **9**, can be charged with a series of short, like duration interrogation pulses, the same transponders could be charged with a series of successively longer duration interrogation pulses, as shown in Figure **7**. In this way, the interrogation process may be expidited by reaching more transponders simultaneously. Caution may be desired in the use of this interrogation method with transponders which have no discharge function because the benefits of increased range may be offset by the amount of detrimental overages incurred in many of the transponders reached.

It is to be understood that doubling the duration of the interrogation pulse is one pertubation of many possible variations. For example, the pulse duration could be increased up to the 100 % represented by doubling the duration. Actually the increase could be even greater than 100%. As a more complicated example, there is oftentimes a given gaussian or bell shaped distribution of transponders in a given interrogation range. Therefore, instead of the interrogation pulses having double the duration or some other percentage increase, upon the absence of the response signal, the interrogator could have a circuit which would calculate the probability of a transponder falling within a certain range of the interrogator, and then calculate the required interrogation pulse duration to reach that transponder. Or, another alternative would be when sending an interrogation pulse which will potentially power-up many transponders, instead of calculating a specific interrogation pulse duration, increase the duration of the interrogation pulse in much smaller steps. This method would be similar to the way that digital transformations of analog data are done. When an analog signal is in a maximum, where there are many data points located in a small area, the digital steps are made very small to increase the accuracy of the measurment. In the same way, the power time control circuit **24** of the interrogator, could, when in the vicinity of a distribution maximum, make much smaller incremental changes in the duration of the interrogation pulse.

Furthermore, if the transponders do not have a discharge function and are located beyond the maximum in the distribution of transponders, chances are that they are very close to having the required voltage **V**_{**1**} necessary to send a response signal. Therefore, a decrease in the duration of the interrogation pulse may be necessary to charge-up the transponder without the risk of incurring a detrimental overage.

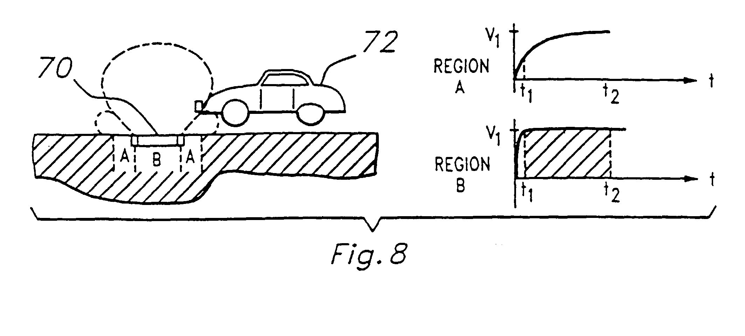

Figure **8** shows that in Automobile Vehicle Identification (AVI) applications involving high speed vehicles, the same types of over-voltage problems exist that are shown in the prior art voltage versus time function shown in Figure **3**. An antenna **60** embedded in the road has the main lobe and side lobe field characteristics shown in the dotted lines. This field characteristic gives rise to three reading regions designated in the main lobe by "Region B" and the side lobes by "Region A". In the main lobe "Region B", the field strength is great and so a very short power pulse of length **t**_{**1**} is necessary to power up the transponder to the required voltage **V**_{**1**}. However, in the side lobes "Region A", there are not as many field lines so, as shown in the graph of region "A", the pulse is not as strong and it takes a longer pulse of length **t**_{**2**} to charge-up the transponder to the reqired voltage **V**_{**1**}. Thus, an interrogator that sends longer pulse lengths to anticipate reading a car at the front of the antenna pattern, wastes a huge percent of the interrogation pulse upon entering the center of the antenna, because the transponder is charged up the the required voltage **V**_{**1**} quickly and then dissipates the greater portion of the interrogation pulse as heat. Therefore, the interrogator optimally sends longer duration pulses, for example 20 msec, when no response from a transponder is detected and the car is still approaching the antenna. However, upon detection of a transponder response signal, the interrogator transmits much shorter duration interrogation pulses, for example 5 msec, because the transponder has been charged by "Region A" of the antenna once and is now in "Region B" of the antenna. The interrogator continues to transmit short duration interrogation pulses until the interrogator does not detect a transponders response for a predetermined amount of time, signifying the departure of the transponder from the range of the interrogation antenna. Upon the absense of the response signal, the interrogator transmits longer duration pulses again.

## Claims

1. A remote identification and sensor system comprising an interrogator (9) for transmitting an interrogation signal, a transponder (25) for receiving said interrogation signal, for performing a sensor measurement and for transmitting a response signal in response to said interrogation signal, an antenna (26) for receiving said interrogation signal and for transmitting said response signal in response, a rectifying element (30) connected in series with said antenna (26) for rectifying said interrogation signal, a storage element (32) connected in series with said antenna (26) for storing a predetermined amount of said rectified interrogation signal, a current sensing over-voltage protection circuit (34, 36) connected in parallel with said series combination of said antenna (26) and said storage element (32), comprising a series combination of an over-voltage protection element (34) and a current sensing element (36), and a circuit element (38) for making a sensor measurement, and for compensating said sensor measurement, and for generating a response signal, having two inputs with one input connected in series with said rectifying element (30) and the second input connected between said over-voltage protection element (34) and said current sensing element (36).

2. The system of claim 1, wherein said circuit element (38) further comprises a logic circuit for compensating said sensor measurement.

3. The system of claim 1, wherein said current sensing element (36), in response to current flow through said current sensing element (36), provides a signal proportional to the amount of current sensed to said logic circuit.

4. The system of claim 3, wherein said current sensing element (36) detects said current flow upon conduction of said over-voltage protection element (34).

5. The system of claim 4, wherein said over-voltage protection element (34) conducts in response to said storage element (32) having a greater than predetermined amount of rectified interrogation signal stored.

6. The system of claim 1, wherein said sensor measures temperature.

7. The system of claim 1, wherein said temperature compensating performed is a decrease in the measured temperature.

## Patentansprüche

1. Fernidentifizierungs- und Sensorsystem mit einer Abfrageeinrichtung (9) zum Senden eines Abfragesignals, einem Transponder(25) zum Empfangen des Abfragesignals, um eine Sensormessung auszuführen und als Antwort auf das Abfragesignal ein Antwortsignal zu senden, einer Antenne (26) zum Empfangen des Abfragesignals und zum Senden des Antwortsignals als Antwort hierauf, einem Gleichrichterelement (30), das mit der Antenne (26) in Serie geschaltet ist, um das Abfragesignal gleichzurichten, einem Speicherelement (32), das mit der Antenne (26) in Serie geschaltet ist, um einen vorgegebenen Betrag des gleichgerichteten Abfragesignals zu speichern, einer Stromerfassungs-Überspannungsschutzschaltung (34, 36), die zu der Serienschaltung aus der Antenne (26) und dem Speicherelement (32) parallelgeschaltet ist und eine Serienschaltung aus einem Überspannungsschutzelement (34) und einem Stromerfassungselement (36) enthält, und einem Schaltungselement (38) zum Ausführen einer Sensormessung und zum Kompensieren der Sensormessung sowie zum Erzeugen eines Antwortsignals, mit zwei Eingängen, wovon einer mit dem Gleichrichterelement (30) in Serie geschaltet ist und der zweite zwischen das Überspannungsschutzelement (34) und das Stromerfassungselement (36) geschaltet ist.

2. System nach Anspruch 1, bei dem das Schaltungselement (38) ferner eine Logikschaltung zum Kompensieren der Sensormessung enthält.

3. System nach Anspruch 1, bei dem das Stromerfassungselement (36) als Antwort auf einen Stromfluß durch das Stromerfassungselement (36) für die Logikschaltung ein Signal liefert, das zum Betrag des erfaßten Stroms proportional ist.

4. System nach Anspruch 3, bei dem das Stromerfassungselement (36) den Stromfluß im leitenden Zustand des Überspannungsschutzelements (34) erfaßt.

5. System nach Anspruch 4, bei dem das Überspannungsschutzelement (34) als Antwort auf die Tatsache leitet, daß in dem Speicherelement (32) ein größerer als der vorgegebene Betrag des gleichgerichteten Abfragesignals gespeichert ist.

6. System nach Anspruch 1, bei dem der Sensor die Temperatur mißt.

7. System nach Anspruch 1, bei dem die durchgeführte Temperaturkompensation in einer Absenkung der gemessenen Temperatur besteht.

## Revendications

1. Système d'identification et de détection à distance comprenant un interrogateur (9) pour émettre un signal d'interrogation, un transpondeur (25) pour recevoir ledit signal d'interrogation, pour exécuter une mesure de détecteur et pour émettre un signal de réponse en réponse audit signal d'interrogation, une antenne (26) pour recevoir ledit signal d'interrogation et pour émettre, en tant que réponse, ledit signal de réponse, un élément redresseur (30) branché en série avec ladite antenne (26) pour redresser ledit signal d'interrogation, un élément de mémoire (32) branché en série avec ladite antenne (26) pour mémoriser une quantité prédéterminée dudit signal d'interrogation redressé, un circuit (34,36) de protection contre une surtension de détection de courant branché en parallèle avec ladite combinaison série formée de ladite antenne (26) et dudit élément de mémoire (32), comprenant une combinaison série d'un élément (34) de protection contre une surtension et un élément de détection de courant (36), et un élément de circuit (38) pour exécuter une mesure de détecteur, et pour compenser ladite mesure de détecteur et pour produire un signal de réponse, comportant deux entrées, dont l'une est branchée en série avec ledit élément redresseur (30) et dont la seconde est branchée entre ledit élément (34) de protection contre une surtension et ledit élément de détection de courant (36).

2. Système selon la revendication 1, dans lequel ledit élément de circuit (38) comporte en outre un circuit logique servant à compenser ladite mesure de détecteur.

3. Système selon la revendication 1, dans lequel, en réponse à un flux de courant traversant ledit élément de détection de courant (36), ledit élément de détection de courant (36) délivre un signal proportionnel à la quantité de courant détectée, audit circuit logique.

4. Système selon la revendication 3, dans lequel ledit élément de détection de courant (36) détecte ledit courant lors de la conduction dudit élément (34) de protection contre une surtension.

5. Système selon la revendication 4, dans lequel ledit élément (34) de protection contre une surtension est conducteur en réponse auxdit élément de mémoire (32) possédant une quantité mémorisée de signal d'interrogation redressé, qui est supérieure à une quantité prédéterminée.

6. Système selon la revendication 1, dans lequel ledit détecteur mesure une température.

7. Système selon la revendication 1, dans lequel ladite compensation de température effectuée est une réduction de la température mesurée.
